# EUROPÄISCHE PATENTSCHRIFT

(11) **EP 1 283 787 B1**
(45) Veröffentlichungstag und Bekanntmachung des Hinweises auf die Patenterteilung: **28.01.2004**
(21) Anmeldenummer: 01940267.6
(22) Anmeldetag: 28.03.2001
(51) Int. Cl.: B60R 1/072

(54) **KRAFTFAHRZEUGSPIEGEL-VERSCHWENKEINRICHTUNG**
AUTOMOBILE MIRROR SWIVELING DEVICE
DISPOSITIF DE ROTATION D'UN RETROVISEUR DE VEHICULE

(30) Priorität: 25.05.2000 DE 10026051
(43) Veröffentlichungstag der Anmeldung: 19.02.2003
(73) Patentinhaber: Oechsler Aktiengesellschaft, 91522 Ansbach (DE)
(72) Erfinder: WOLF, Wilhelm, 91580 Petersaurach (DE); BOEGELEIN, Josef, 91623 Sachsen (DE); SEIBOTH, Wolfgang, 94438 Bad Windsheim (DE); LANG, Heinrich, 91465 Ergersheim (DE)
(86) Internationale Anmeldenummer: PCT/EP2001/003524
(87) Internationale Veröffentlichungsnummer: WO 2001/089880

(56) Entgegenhaltungen:
- DE-A- 4 312 847
- FR-A- 2 471 887
- PATENT ABSTRACTS OF JAPAN vol. 004, no. 060 (M-010), 6. Mai 1980 (1980-05-06) & JP 55 025666 A (KOITO MFG CO LTD), 23. Februar 1980 (1980-02-23)
- PATENT ABSTRACTS OF JAPAN vol. 004, no. 017 (M-091), 9. Februar 1980 (1980-02-09) & JP 54 153447 A (KOITO MFG CO LTD), 3. Dezember 1979 (1979-12-03)

## Beschreibung

Die Erfindung betrifft eine motorische Verschwenkeinrichtung gemäß dem Oberbegriff des Hauptanspruches.

Eine Verschwenkeinrichtung eines Kraftfahrzeugspiegels ist aus der EP 0 316 055 vorbekannt in der Bauform eines Gehäuses zur Aufnahme von je einem reversierbaren elektrischen Kleinmotor für den koordinierten Antrieb von zwei stößelartigen Gewindestangen, an deren Stirnenden eine Spiegelträger-Platte angelenkt ist und die gegensinnig bezüglich einander aus dem Gehäuse heraus bzw. in dieses eingefahren werden. Dadurch verschwenken sie die Trägerplatte um eine Achse mittig quer zur Verbindungslinie zwischen beiden Gewindestangen. Die Bewegungsübertragung vom Motor zur ihm zugeordneten Gewindestange erfolgt jeweils mittels eines Triebes auf der Motorwelle, der eine am Gehäuse axial festgelegte Gewindebuchse über eine Außenverzahnung verdreht und dadurch die Gewindestange linear verlagert, deren Außengewinde mit dem Innengewinde der Buchse in Eingriff steht.

Das Erfordernis, für diese einfache Schwenkbewegung der Trägerplatte um eine Schwenkachse gleich zwei gegensinnig koordiniert wirkende motorische Antriebe einsetzen zu müssen, ist allerdings sehr kostenaufwendig. Außerdem ist die Betriebszuverlässigkeit infolge der Gefahr nicht genau synchronen Betriebes beeinträchtigt; denn wenn die beiden Gewindestangen von ihren Motoren nicht exakt gegensinnig bewegt werden, dann erfolgt keine reproduzierbare Verschwenkbewegung der Trägerplatte um eine gerätefest geometrisch vorgegebene Achse, sondern diese Schwenkachse erfährt einen seitlichen Versatz.

Um mit nur einem Getriebemotor für die beiden zueinander orthogonalen Schwenkachsen auszukommen, ist bei einer Lösung gemäß der gattungsgemäßen JP 55 025666 A die Lagerung der Träger-Platte im Kreuzungspunkt der Schwenkachsen auf einem Kugelgelenk vorgesehen. Längs einer Linie, die zur ersten der beiden Schwenkachsen parallel versetzt verläuft, sind abseits der quer dazu orientieren zweiten Schwenkachse an der Rückseite der Träger-Platte zwei Gewindestangen stirnseitig gelenkig befestigt, die von einem Schaltgetriebe über den einzigen, beiden Schwenkachsen gemeinsamen Motor verdreht und dadurch ein- oder ausgefahren werden können. Wenn das Getriebe beide Gewindestangen gleichsinnig bewegt, wird die Träger-Platte um die erste Schwenkachse verkippt, die zur Befestigungslinie durch die beiden Gewindestangen parallel verläuft. Wenn das Getriebe dagegen so umgeschaltet wird, daß der Motor beide Gewindestangen gegensinnig zueinander bewegt, wird die Träger-Platte nun um die quer zur Befestigungslinie verlaufende, zweite Schwenkachse gekippt. Das bedingt allerdings apparativ hohen und grundsätzlich störungsanfälligen Schaltgetriebeaufwand und läßt doch keine gleichzeitige Verstellung der Träger-Platte um beide Schwenkachsen zugleich zu. Auch ist damit nicht ohne weiteres eine übereinstimmende Kinematik für die Bewegung um die beiden Schwenkachsen erzielbar, was den Anforderungen der Praxis an definierte und reproduzierbare Einstellbewegungen widerspricht.

Aus der US 1 147 896 ist es seit langem als solches bekannt, zum Umwandeln einer Drehbewegung in eine rasche und hoch belastbare Oszillation etwa zum Antrieb von Gattersägen, von Pumpenkolben oder von Heupressen einen Pendelarm über eine exzentrische Anlenkung in ausschwenkende Bewegung zu versetzen. Anregungen für eine reproduzierbare, mechanisch stabile elektromotorische Einstellung der Neigung eines Spiegels sind in der Fachwelt offenbar aus jener alten Publikation nicht hergeleitet worden.

Ebenfalls seit längerem bekannt ist es aus der US 4 644 809, für eine getriebliche periodische Sequenzsteuerung einer Anzahl von Ventilen für das Wassermanagement in einer Haushaltswaschmaschine eine rotierende Steuerscheibe mit Kronradverzahnung und darin unter radialer Orientierung zur Scheibe eingreifendem Motorwellen-Ritzel vorzusehen. Die Scheibe ist mit zwei konzentrisch umlaufenden abgestuften Nuten mit Innenverzahnungen ausgestattet, in welche die stationär angeordneten Ventile mit ihren Stellwellen eingreifen, die mit Zahnrädern unterschiedlicher Durchmesser ausgestattet sind und deshalb entsprechend unterschiedlich tief in die Nuten eingreifen, um in Abhängigkeit davon bei Rotation der Steuerscheibe periodisch aber unterschiedlich schnell geöffnet und wieder geschlossen zu werden. Mittels solcher Verdrehungssequenzen von Ventilwellen lassen sich aber keine Kraftfahrzeugspiegel einstellen.

In Erkenntnis deren oben referierter Mängel liegt vorliegender Erfindung nämlich das technische Problem zugrunde, eine gattungsgemäße Verschwenkeinrichtung funktional robuster und doch infolge geringeren Aufwandes an Einzelteilen kostengünstiger auszulegen.

Diese Aufgabe ist erfindungsgemäß dadurch gelöst, daß gemäß den wesentlichen im Hauptanspruch angegebenen Merkmalen für die motorische Schwenkbewegung die beiden einer Schwenkachse zugeordneten Gewindestangen über ihre Gewindebuchsen sowohl miteinander wie auch mit einem ihnen gemeinsamen Motor getrieblich in Drehverbindung stehen. Dafür liegt im flachen Gehäuse, an dem die beiden drehfest gehalterten Gewindestangen in ihren Längsrichtungen quer zur Hauptebene des Gehäuses heraus- bzw. hineingefahren werden, etwa parallel zur Spiegel-Platte ein Rad, das formschlüssig über seine Verzahnung mit jeder der beiden Gewindebuchsen für die Gewindestangen getrieblich verbunden ist. Die Buchsen sind parallel zur Drehachse des Rades und an diesem einander diametral gegenüber axial gehäusefest drehbar gelagert. Der den beiden Gewindestangen einer Schwenkachse gemeinsame elektrisch reversierbare Stellmotor liegt vorzugsweise mit seiner Achse in der Ebene des Rades und greift z.B. mit einem Schneckentrieb, mit dem die Motorwelle ausgestattet ist, in eine äußere (Stirn- oder Kron-) Verzahnung des Rades ein. Bei dieser handelt es sich bevorzugt um die gleiche Verzahnung, die mit den Außenverzahnungen der beiden Gewindebuchsen kämmt. Ein gleichartiges, gemeinsam von einem weiteren solchen Reversiermotor über sein Rad und dessen Buchsen angetriebenes Paar von Gewindestangen kann parallel zum ersterwähnten ausgerichtet aber quer dazu positioniert sein. Im Falle wieder formschlüssiger getrieblicher Drehverbindung kämmen also dessen Gewindebuchsen mit einem gesondert motorisch antreibbaren Zahnrad, das einen etwas geringeren Durchmesser aufweist und auf oder unter dem erstgenannten Rad gelagert ist, um die Schwenkbewegung der Platte auch um eine zur ersterwähnten Achse orthogonale Achse - und somit, infolge deren Überlagerung, in beliebiger Raumrichtung - durchführen zu können. Mit dieser Ergänzung ist erfindungsgemäß bei einer verkantungssicher arbeitenden Verschwenkeinrichtung die Träger-Platte eines motorisch verstellbaren Lastkraftwagen-Außenspiegels gelenkig auf vier mehr oder weniger weit aus dem Gehäuse herausfahrbare Gewindestangen montiert, die über je ein (Zahn)-Rad paarweise zueinander gegensinnig von einem dem Rad zugeordneten umsteuerbaren Getriebemotor bewegt werden.

Zur näheren Erläuterung der Erfindung sowie ihrer Abwandlungen und Weiterbildungen wird außer auf die Unteransprüche auch auf nachstehende Beschreibung eines in der Zeichnung etwa maßstabsgerecht aber auf das Funktionswesentliche abstrahiert skizzierten bevorzugten Ausführungsbeispiels zur erfindungsgemäßen Lösung verwiesen. Darin zeigt :
- Fig.1: im abgebrochenen Axial-Längsschnitt durch eine Gewindestange ein objektfest zu montierendes Gehäuse mit der erfindungsgemäßen Schwenkeinrichtung zum Verkippen einer Träger-Platte in allen Raumrichtungen und
- Fig.2: die Anordnung aus Fig.1 bei entferntem Gehäuse in rückwärtiger Draufsicht.

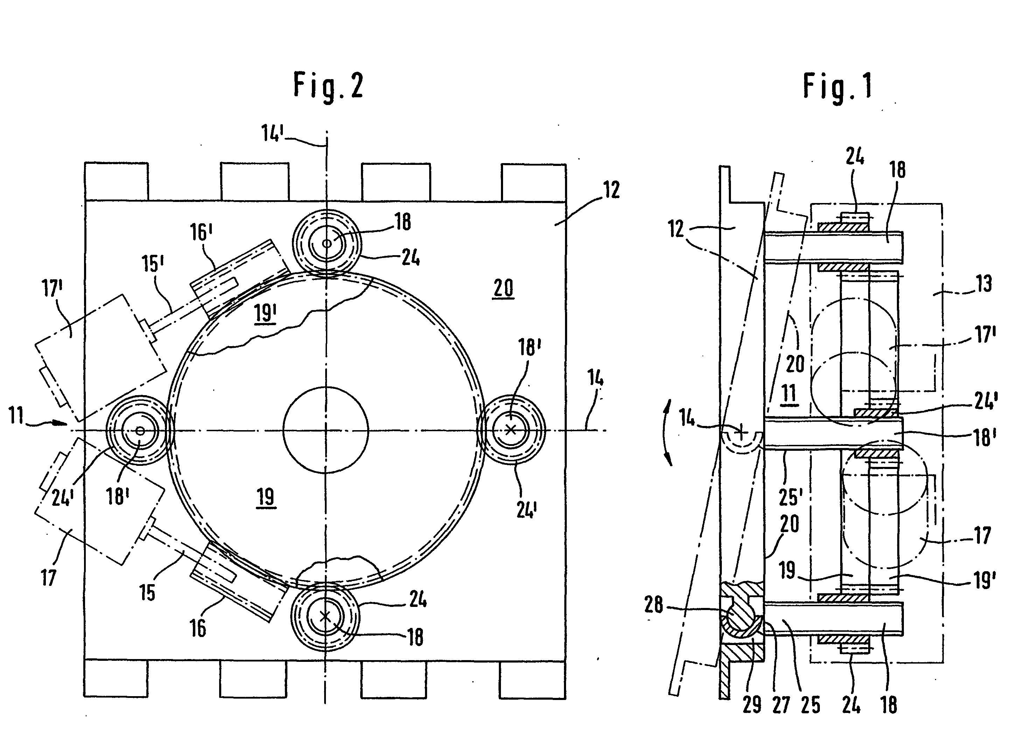

Die motorgetriebliche Anordnung der erfindungsgemäßen Verschwenkeinrichtung 11 für eine Träger-Platte 12 etwa zur Aufname eines motorisch verstellbaren Kraftfahrzeug-Rückspiegels befindet sich im Innern eines ortsfest zu montierenden flachen Gehäuses 13. Darin ist für jede zweier zueinander orthogonaler Schwenkbewegungsmöglichkeiten (Schwenkachsen 14, 14') der Platte 12 ein elektrisch reversierbarer Kleinspannungs-Getriebemotor 17, 17' angeordnet. Der steht über einen ausgangsseitigen Trieb 16, 16' z.B. auf seiner Motorwelle 15, 15'(Fig.2) und über ein zum Kreuzungspunkt der Schwenkachsen 14/14' konzentrisch verdrehbares, flach im Gehäuse liegendes Rad 19, 19' sowie über verdrehbar gelagerte Gewindebuchsen 24 mit einem Paar von drehfest gehalterten aber längsverlagerbaren Gewindestangen 18-18, 18'-18'in Wirkverbindung, vorzugsweise getrieblich nämlich formschlüssig über Verzahnungen bzw. Gewindegänge. So können die Gewindestangen 18, 18' je nach der Drehrichtung des Motors 17, 17' und des Rades 19, 19' - in ihren Buchsen 24 parallel zueinander geführt - längs einer zur Hauptebene des Gehäuses 13 und der Platte 12 etwa orthogonalen Richtung verschoben werden, nämlich einerseits in das Gehäuse 13 hinein und diametral gegenüber zugleich in gleichem Maße daraus heraus, und umgekehrt.

Das freie Stirnende 27 des in Richtung auf die Platten-Rückseite 20 aus dem Gehäuse 13 austretenden Endstückes 25, 25' der Gewindestangen 18, 18' ist nach Überbrücken einer freien Distanz zwischen Gehäuse 13 und Platten-Rückseite 20 gelenkig an die Platte 12 angeschlossen. So wird die Platte 12 mittels der vier aus dem Gehäuse 13 mehr oder weniger weit austretenden, abwechselnd auf Zug und Druck belasteten, biegesteifen Gewindestangen 18, 18' vor dem Gehäuse 13 in praktisch beliebigen Raumrichtungen einstellbar gehaltert. Wie in Fig.1 berücksichtigt liegt dabei der Anschlußbereich 28 einer Gewindestange 18, 18' vorzugsweise im Innern der Platte 12, etwa realisiert als quer zum Übergriff belastetes Kugelgelenk in einem als Sackloch rückwärtig hineinragenden oder wie skizziert als Durchgangsloch die Platte 12 ganz durchquerenden Hohlraum 29. Eine solche Anlenkung zur Bewegungsübertragung läßt sich problemlos, preisgünstig und auch unter Vibrationsbeanspruchung funktionssicher, mit Kunststoff-Spritzgußteilen realisieren.

Als gehäusefeste Längsführung für die unverdrehbar gehalterte Gewindestange 18, 18' und zugleich als Getriebeelement zwischen jener und dem (Zahn)-Rad 19, 19' dient jeweils eine axial gehäusefest aber verdrehbar gelagerte Gewindebuchse 24, 24' (vgl. auch Fig.2) zur koaxialen Aufnahme einer der Gewindestangen 18. 18'. Bei Außenverzahnung des Rades 19, 19' kämmt diese Stirnverzahnung mit einer Außenverzahnung jeder seiner beiden Buchsen 24-24, 24'-24', und deren Innengewinde kämmt jeweils mit dem Außengewinde der zugeordneten der Stangen 18-18, 18'-18'.

Wenn nun einer der beiden Motoren 17, 17' sein (Zahn-)Rad 19, 19' verdreht, wird dadurch über die Gewindebuchsen 24-24, 24'-24' gleichzeitig eine der Gewindestangen 18,18; 18',18' aus dem Gehäuse 13 heraus und die ihr diametral gegenüberliegend zugeordnete des Paares um das gleiche Maß hinein gefahren, wodurch die Platte 12 geometrisch exakt und mechanisch stabil um die Achse 14 bzw. 14' verschwenkt wird.

Da die Gewindestangen 18, 18' wie dargestellt paarweise einander diametral bezüglich des Schnittpunktes der beiden Schwenkachsen 14 / 14' gegenüber unter gegensinniger Krafteinleitung rückwärtig an die Platte 12 angelenkt sind, erbringt das eine vibrationsfeste symmetrische Aufhängung der Platte 12 am tragenden Gehäuse 13 und störungsfreie Einstellvorgänge, weil mit der Verschwenkbewegung (angedeutet in Fig.1 für die Achse 14 durch den gebogen Doppelpfeil vor der Spiegel-Halterungsplatte 12) immer beim einen Platten-Anschluß 28 eine Zugbeanspruchung und gleichzeitig diametral gegenüber eine Druck- oder Schubbeanspruchung gegen die Spiegel-Trägerplatte 12 auftritt.

## Patentansprüche

1. Kraftfahrzeugspiegel-Verschwenkeinrichtung (11) mit einer Spiegelträger-Platte (12), die um zwei zueinander orthogonale Schwenkachsen (14, 14') gegenüber einem objektfesten Gehäuse (13) verschwenkbar ist, **dadurch gekennzeichnet, daß** die Platte (12) von zwei Gewindestangen (18-18, 18'-18') pro Schwenkachse (14, 14') getragen wird, die sich ihrerseits durch je eine Gewindebuchse (24, 24') mit zusätzlichem Außengewinde erstrekken,
welche Gewindebuchsen (24, 24') verdrehbar am Gehäuse (13) gelagert sind,
und derart in Drehverbindung miteinander stehen,
daß jede des Paares von Gewindestangen (18-18, 18'-18') einer Schwenkachse (14, 14') durch Verdrehen ihres Paares von Gewindebuchsen (24-24, 24'-24') mehr oder weniger weit die eine Gewindestange (18, 18') in das Gehäuse (13) hinein und gegenüberliegend zugleich die andere Gewindestange (18, 18') aus dem Gehäuse (13) heraus bewegbar sind
und dadurch die Spiegelträger-Platte (12) um eine der beiden Schwenkachsen (14, 14') verschwenken,
wofür pro Schwenkachse (14, 14') ein Motor (17, 17') mit Trieb (16, 16') und ein von diesem Trieb (16, 16') verdrehbares Rad (19, 19') vorgesehen sind,
welches mit einer Außenverzahnung ausgestattet ist,
die sowohl mit dem Trieb (16, 16') des Motors (17, 17') wie auch mit den Außengewinden an den beiden Gewindebuchsen (24, 24') für diese Schwenkachse (14, 14') kämmt.

2. Verschwenkeinrichtung nach Anspruch 1, **dadurch gekennzeichnet, daß** jeder der beiden Motore (17, 17') parallel zur Hauptebene eines ihm zugeordneten der beiden Räder (19, 19') orientiert und mit einem Schnecken-Trieb (16, 16') ausgestattet ist, mit dem die Außenverzahnung des zugeordneten der beiden Räder (19, 19') kämmt, die auch mit den beiden diesem Rad (19, 19') zugeordneten Gewindebuchsen (24, 24') in Eingriff steht, welche dem Trieb (16, 16') gegenüber in Umfangsrichtung des jeweiligen Rades (19, 19') versetzt sind.

3. Verschwenkeinrichtung nach einem der vorangehenden Ansprüche, **dadurch gekennzeichnet, daß** zwei koaxial aufeinanderliegende Räder (19, 19') vorgesehen sind, an denen jeweils ein Paar der zwei zueinander orthogonal ausgerichteten Paare von Gewindebuchsen (24-24, 24'-24') zur Axialverlagerung ihrer Gewindestangen (18-18, 18'-18') in Verzahnungseingriff stehen.

## Claims

1. Motor-vehicle mirror-pivoting device (11) having a mirror support plate (12) which can be pivoted about two mutually orthogonal pivot axes (14, 14') with respect to a housing (13) fixed on an object, **characterized in that** the plate (12) is supported by two threaded rods (18-18, 18'-18') per pivot axis (14, 14'), which, in turn, extend through a respective threaded bushing (24, 24') having an additional external thread, the said threaded bushings (24, 24') being mounted rotatably on the housing (13) and being rotationally connected to each other in such a manner that each of the pair of threaded rods (18-18, 18'-18') of a pivot axis (14, 14') can move, by rotation of its pair of threaded bushings (24-24, 24'-24'), the one threaded rod (18, 18') to a greater or lesser distance into the housing (13) and, on the opposite side, can simultaneously move the other threaded rod (18, 18') out of the housing (13), thus causing the mirror support plate (12) to pivot about one of the two pivot axes (14, 14'), for which purpose, one motor (17, 17') with a pinion (16, 16') and one gear (19, 19') which can be rotated by this pinion (16, 16') being provided per pivot axis (14, 14'), the gear being provided with external teeth which mesh both with the pinion (16, 16') of the motor (17, 17') and with the external threads on the two threaded bushings (24, 24') for this pivot axis (14, 14').

2. Pivoting device according to Claim 1, **characterized in that** each of the two motors (17, 17') is orientated parallel to the main plane of one of the two gears (19, 19') assigned to it, and is equipped with a worm gear (16, 16'), which meshes with the external teeth of the assigned gear of the two gears (19, 19' ) and which is also in engagement with the two threaded bushings (24, 24') which are assigned to this gear (19, 19') and are offset with respect to the pinion (16, 16') in the circumferential direction of the particular gear (19, 19').

3. Pivoting device according to one of the preceding claims, **characterized in that** two gears (19, 19') are provided, the gears lying coaxially on each other and on each of which one pair of the two pairs of threaded bushings (24-24, 24'-24'), which are aligned orthogonally to each other, are in toothed engagement for the axial displacement of their threaded rods (18-18, 18'-18').

## Revendications

1. Dispositif de rotation (11) d'un rétroviseur de véhicule, comprenant une plaque de support de rétroviseur (12) qui peut pivoter autour de deux axes de pivotement (14, 14') perpendiculaires l'un à l'autre par rapport à un boîtier (13) fixé sur un objet, **caractérisé en ce que** la plaque (12) est portée par deux tiges filetées (18-18, 18'-18') par axe de pivotement. (14, 14'), qui s'étendent pour leur part à travers une douille filetée (24, 24') respective avec un filetage extérieur supplémentaire,
lesquelles douilles filetées (24, 24') sont montées rotatives sur le boîtier (13) et sont en relation de rotation l'une avec l'autre de telle sorte que chacune de la paire de tiges filetées (18-18, 18'-18') d'un axe de pivotement (14, 14'), par rotation de sa paire de douilles filetées (24-24, 24'-24') soit déplacée plus ou moins loin, l'une des tiges filetées (18, 18') dans le boîtier (13) et l'autre tige filetée (18, 18') sortant simultanément de manière opposée hors du boîtier (13),
et faisant pivoter ainsi la plaque de support de rétroviseur (12) autour de l'un des deux axes de pivotement (14, 14'),
un moteur (17, 17') avec un pignon (16, 16') et une roue (19, 19') pouvant être entraînée en rotation par ce pignon (16, 16') étant prévus à cet effet pour chaque axe de pivotement (14, 14'), cette roue étant munie d'une denture extérieure qui s'engrène à la fois avec le pignon (16, 16') du moteur (17, 17') ainsi qu'avec les filetages extérieurs sur les deux douilles filetées (24, 24') pour cet axe de pivotement (14, 14').

2. Dispositif de rotation selon la revendication 1, **caractérisé en ce que** chacun des deux moteurs (17, 17') est orienté parallèlement au plan principal de l'une des deux roues (19, 19') qui lui est associée et est équipé d'un engrenage à vis sans fin (16, 16') avec lequel la denture extérieure de la roue associée des deux roues (19, 19') s'engrène, laquelle est également en engagement avec les deux douilles filetées (24, 24') associées à cette roue (19, 19'), lesquelles sont décalées par rapport au pignon (16, 16') dans la direction périphérique de la roue respective (19,19').

3. Dispositif de rotation selon l'une quelconque des revendications précédentes, **caractérisé en ce que** deux roues superposées coaxialement (19, 19') sont prévues, avec lesquelles à chaque fois une paire des deux paires de douilles filetées (24-24, 24'-24') orientées perpendiculairement l'une à l'autre est en engagement de dentures en vue du décalage axial de leurs tiges filetées (18-18, 18'-18').
